# EUROPEAN PATENT APPLICATION

(11) **EP 3 091 343 A1**
(43) Date of publication of application: **09.11.2016**
(21) Application number: 16168411.3
(22) Date of filing: 04.05.2016
(51) Int. Cl.: G01J 3/02, G01J 3/18, G01J 3/28

(54) **INFRARED SPECTROMETERS**

(30) Priority: 06.05.2015 US 201514705203
(71) Applicant: Goodrich Corporation, Charlotte, NC 28217 (US)
(72) Inventor: GITTINS, Christopher, Bedford, MA Massachusetts 01730 (US); TEJADA, John A, Londonderry, NH New Hampshire 03053 (US)
(74) Representative: Hall, Matthew Benjamin

(57) **Abstract**

An infrared spectrometer assembly (100; 200) includes an entrance slit (101; 201) and a collimating optical element (102; 202) aligned with the entrance slit. A diffractive optical element (104; 204) is optically coupled to the collimating optical element. A focusing optical element (103; 203) is optically coupled to the diffractive optical element. A detector array (106; 206) is optically coupled to the focusing optical element. A linear variable filter, LVF, (108; 208) is optically coupled between the focusing optical element and the detector array. A method (300) for filtering a baseline signal emitted from spectrometer components in the infrared spectrometer assembly includes transmitting (304) radiation into a spectrometer and passing (306) the radiation through the LVF to filter the baseline signal being emitted from spectrometer components. The method includes receiving (308) the radiation in the detector array.

## Description

### BACKGROUND OF THE INVENTION

### 1. Field of the Invention

The present invention relates to spectrometers, and, in particular, to infrared spectrometers used in imaging systems.

### 2. Description of Related Art

Traditional infrared spectrometers, for example long-wave infrared (LWIR) spectrometers, are typically operated at cryogenic temperatures in order to minimize the contribution of spectrometer self-radiance to the detector signal. Spectrometer self-radiance has unfavorable effects on LWIR spectral measurements, for example, it produces a baseline signal which reduces the dynamic range (DR) of detector measurements and increases the photon statistical noise (a.k.a. shot noise) associated with the baseline signal thus degrading the signal-to-noise ratio of measurements. The cryogenic cooling typically used to reduce or otherwise eliminate spectrometer self-radiance tends to increases the size, weight, and power consumption of the spectrometer assembly and complicates its operation.

Such conventional methods and systems have generally been considered satisfactory for their intended purpose. However, there is still a need in the art for systems and methods that allow for improved infrared spectrometers. The present invention provides a solution for these problems.

### SUMMARY OF THE INVENTION

An infrared spectrometer includes an entrance slit and a collimating optical element aligned with the entrance slit. A diffractive optical element is optically coupled to the collimating optical element. A focusing optical element is optically coupled to the diffractive optical element. A detector array is optically coupled to the focusing optical element. A linear variable filter (LVF) is optically coupled between the focusing optical element and the detector array.

The collimating optical element and the focusing optical element can be on a single mirror. The LVF can be aligned with the detector array such that the peak of the transmission spectrum of the section of the LVF aligned with a given detector element corresponds with the peak of the spectrometer transmission spectrum transmitted to that detector element by the focusing optical element. The LVF can be a transmission filter having a spatially-varying transmission spectrum, and/or the transmission spectrum of the LVF for a given detector element can have a bandpass width ranging from one to four percent of the wavelength at the peak of the spectrometer transmission spectrum corresponding to that detector element. The LVF can be a transmission filter whose linear dispersion is matched to the linear dispersion of the diffractive optical element coupled with the focusing optical element. The LVF can be a long-wave infrared (LWIR) 8 to 12 micron transmission filter, e.g. the LVF transmits wavelengths in the LWIR spectral region. The entrance slit, the collimating optical element, the diffractive optical element, and the focusing optical element can be free of cryogenic cooling. The detector array and the LVF can be cryogenically cooled.

In another aspect, a method for filtering a baseline signal emitted from spectrometer components in the infrared spectrometer assembly includes transmitting radiation into a spectrometer and passing the radiation through the LVF to filter the baseline signal being emitted from spectrometer components. The method includes receiving the radiation in the detector array.

It is contemplated that the method can include tuning the spectrometer to a desired wavelength. Passing the radiation through the LVF can include passing a bandwidth, e.g. full-width at half-maximum (FWHM), ranging from ±0.5% to ±2% of the desired wavelength. The entrance slit, collimating optical element, diffractive optical element, and focusing optical element of the spectrometer can be at ambient temperature. The method can include cryogenically cooling the LVF and the detector array. The method includes aligning the LVF with the detector array such that the peak of the transmission spectrum of the section of the LVF aligned with a given detector element corresponds with the peak of the spectrometer transmission spectrum transmitted to that detector element by the spectrometer.

These and other features of the systems and methods of the subject invention will become more readily apparent to those skilled in the art from the following detailed description of the preferred embodiments taken in conjunction with the drawings.

### BRIEF DESCRIPTION OF THE DRAWINGS

So that those skilled in the art to which the subject invention appertains will readily understand how to make and use the devices and methods of the subject invention without undue experimentation, preferred embodiments thereof will be described in detail herein below by way of example only and with reference to certain figures, wherein:
Fig. 1 is a schematic depiction of an exemplary embodiment of a spectrometer assembly constructed in accordance with the present disclosure, showing a linear variable filter (LVF) in front of a detector array;
Fig. 2 is a schematic depiction of another exemplary embodiment of a spectrometer assembly constructed in accordance with the present disclosure, showing a LVF in front of a detector array; and
Fig. 3 is a schematic diagram of an exemplary method of filtering a baseline signal emitted from spectrometer components in an infrared spectrometer assembly in accordance with embodiments of the present invention, showing operations for passing radiation through the LVF.

### DETAILED DESCRIPTION OF THE PREFERRED EMBODIMENTS

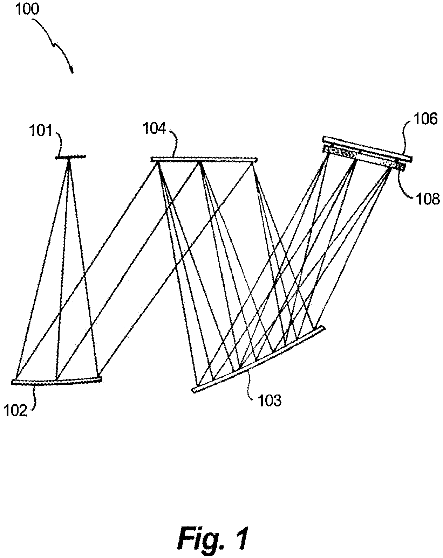

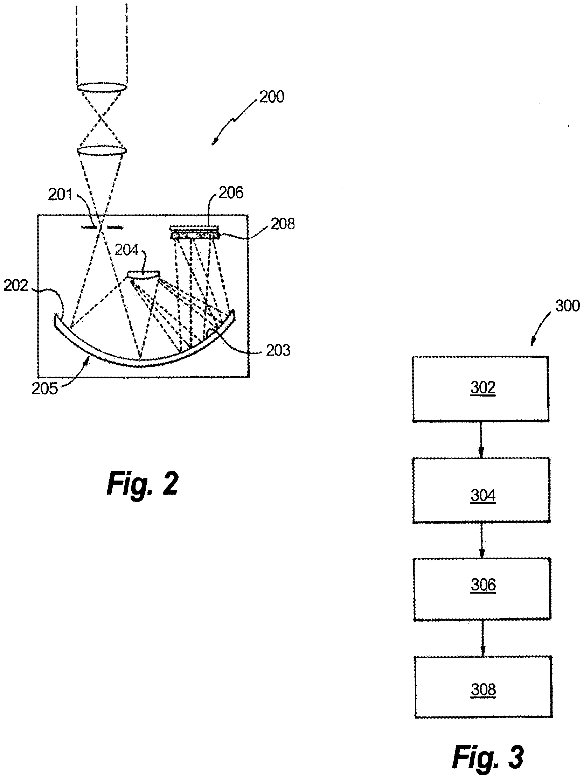

Reference will now be made to the drawings wherein like reference numerals identify similar structural features or aspects of the subject disclosure. For purposes of explanation and illustration, and not limitation, a perspective view of an exemplary embodiment of an infrared (IR) spectrometer assembly in accordance with the disclosure is shown in Fig. 1 and is designated generally by reference character 100. Other embodiments of IR spectrometer assemblies in accordance with the disclosure, or aspects thereof, are provided in Figs. 2-3, as will be described.

The systems and methods described herein provide for a spectrometer assembly that does not require cryogenic cooling for the entire assembly, while still avoiding complications that can occur at ambient temperatures due to spectrometer self-radiance, e.g. reduced dynamic range (DR) of detector measurements and increased photon statistical noise (a.k.a. shot noise). This results in an increased signal-to-noise ratio (SNR) and increased measurement dynamic range of LWIR spectrometers to which it is applied, without having to cryogenically cool the spectrometer entrance slit and/or other components. The embodiments described herein do not require cooling of the entrance slit or precise control of internal reflections/scattered IR light as required in some traditional systems.

As shown in Fig. 1, an infrared spectrometer assembly 100 includes an entrance slit 101 for allowing radiation to enter infrared spectrometer assembly 100. Those skilled in the art will readily appreciate that infrared spectrometer assembly 100 is an unfolded Czerny-Turner spectrometer. A collimating optical element 102, e.g. a collimating mirror, is aligned with entrance slit 101. A diffractive optical element 104 is optically coupled to collimating optical element 102. Those skilled in the art will readily appreciate that diffractive optical element 104 can be a diffraction grating. A focusing optical element 103, e.g. a focusing mirror, is optically coupled to diffractive optical element 104. A detector array 106 is optically coupled to focusing optical element 103. A variable filter 108, e.g. a linear variable filter (LVF), is optically coupled between focusing optical element 103 and detector array 106. Those skilled in the art will readily appreciate that variable filter 108 can be a LVF, a circular variable filter, or the like. LVF 108 is a transmission filter with spatially-varying bandpass which transmits radiation in the long-wave infrared (LWIR) spectral region, for example, 8-12 microns, 7-13 microns, or the like.

With continued reference to Fig. 1, LVF 108 is aligned with detector array 106 such that the peak of the transmission spectrum of the section of LVF 108 aligned with a given detector element corresponds with the peak of the spectrometer transmission spectrum transmitted to that detector element by focusing optical element 103. It is contemplated that LVF 108 can be aligned with detector array 106 by using a fixed-wavelength, narrowband LWIR light source, such as a CO₂ laser or a quantum cascade laser. The LWIR light source would be used to illuminate an integrating sphere. An output port of the integrating sphere would be imaged onto the entrance slit of a spectrometer, e.g. entrance slit 101 or spectrometer 100, without an LVF, e.g. LVF 108, in place. A small number of detector elements (several) on a detector array, e.g. detector array 106, would be illuminated by the emission from the integrating sphere. The LVF would then be overlaid with the detector array. If it is not aligned with the detector array, then the illumination from the sphere will be blocked. The LVF is then translated and rotated to maximize the signal from the detector elements which were responsive without the LVF in place. When the signal is maximized then the LWIR source is tuned to a different wavelength. For example, a tunable CO₂ laser operating at 9.2, 9.6, or 10.6 microns can be used to align LFV 108 over detector array 106 by adjusting LVF 108 until the throughout transmission is maximized for that pixel.

Entrance slit 101, collimating optical element 102, diffractive optical element 104, and focusing optical element 103 are free of cryogenic cooling, while detector array 106 and LVF 108 are cryogenically cooled. This reduces size, weight, and power requirements for spectrometer assembly 100 as well as making it easier to operate, as compared with traditional spectrometers, where the entire spectrometer assembly had to be cryogenically cooled in order to achieve similar results.

It is contemplated that the transmission spectrum of LVF 108 for a given detector element can have a bandpass width ranging from one to four percent of the peak wavelength of the spectrometer transmission spectrum corresponding to that detector element, for example a bandwidth (FWHM) ranging from ±0.5% to ±2% of the wavelength at the peak of the spectrometer transmission spectrum. LVF 108 acts to restrict the spectral response range of detector 106. For example, a standard LWIR bandpass filter would allow a spectral response ranging from about 8000 to 12000 nm, 7500 to 12500 nm, or 7000 to 13000 nm, while the transmission of an LWIR LVF is typically on the order of several percent, for example ranging from one to four percent of the spectrometer transmission spectrum, and varies linearly across the filter. As a specific example, for a wavelength in the middle of the spectrometer's response range, e.g. 10,000 nm, a 2% bandpass is 200 nm, which is 1/20th of the bandpass of a standard LWIR bandpass filter.

Those having skill in the art will readily appreciate that the narrow bandpass of the LVF, such as 200 nm for a response range of 10,000 nm, will reduce the baseline photon flux on detector 106 to about the same proportion of 1/20. Those skilled in the art will readily appreciate that reducing the baseline photon flux from an ambient temperature spectrometer by a factor of approximately 20, places that same ambient spectrometer in the range of the baseline flux associated with spectrometers at cryogenic temperatures. This dramatically improves SNR and DR at ambient temperatures relative to using an LWIR bandpass filter only, thereby reducing the need for cryogenic cooling of portions of the spectrometer.

As shown in Fig. 2, another embodiment of an infrared spectrometer assembly 200 is shown. Infrared spectrometer assembly 200 is an Offner spectrometer assembly. Assembly 200 includes an entrance slit 201 for allowing radiation to enter infrared spectrometer assembly 200. In contrast to assembly 100, a collimating optical element 202, e.g. a collimating mirror, aligned with entrance slit 201, and a focusing optical element 203 are provided as parts of a single mirror 205. A diffractive optical element 204 is optically coupled to collimating optical element 202 of mirror 205. Those skilled in the art will readily appreciate that diffractive optical element 204 can be a diffraction grating. Focusing optical element 203, e.g. a focusing mirror, is optically coupled to diffractive optical element 204. A detector array 206 and a LVF 208 are similar to detector array 106 and LVF 108. LVF 108 is optically coupled between focusing optical element 203 and detector array 206. Those skilled in the art will readily appreciate that LVFs 108 and 208 can be used in conjunction with a variety of spectrometer assemblies, for example, crossed Czerny-Turner spectrometers, a variety of Offner spectrometers, and the like.

As shown in Fig. 3, a method 300 for filtering a baseline signal emitted from spectrometer components in an infrared spectrometer assembly, e.g. assembly 100, includes aligning and tuning an LVF, e.g. LVF 108, with a detector array, e.g. detector array 106, such that the peak of the transmission spectrum of the section of the LVF aligned with a given detector element corresponds with the peak of the spectrometer transmission spectrum transmitted to that detector element by the spectrometer, and cryogenically cooling the LVF and the detector array, as indicated by box 302. Method 300 includes transmitting radiation into a spectrometer, as indicated by box 304. Method 300 includes passing radiation having a bandwidth (FWHM) ranging from ±0.5% to ±2% of the desired wavelength through the LVF to filter the baseline signal being emitted from spectrometer components, as indicated by box 306. Method 200 includes receiving the radiation in the detector array, as indicated by box 208.

The methods and systems of the present disclosure, as described above and shown in the drawings, provide for infrared spectrometers with superior properties including reduced size, weight, cost, and power requirements. While the apparatus and methods of the subject disclosure have been shown and described with reference to preferred embodiments, those skilled in the art will readily appreciate that changes and/or modifications may be made thereto without departing from the scope of the subject disclosure.

Further aspects of the invention will now be described according to the following numbered clauses:
1. An infrared spectrometer assembly comprising:
   an entrance slit;
   a collimating optical element aligned with the entrance slit;
   a diffractive optical element optically coupled to the collimating optical element;
   a focusing optical element optically coupled to the diffractive optical element;
   a detector array optically coupled to the focusing optical element; and
   a linear variable filter (LVF) optically coupled between the focusing optical element and the detector array.
2. An infrared spectrometer assembly as recited in clause 1, wherein the collimating optical element and the focusing optical element are on a single mirror.
3. An infrared spectrometer assembly as recited in clause 1, wherein the LVF is aligned with the detector array such that the peak of the transmission spectrum of the section of the LVF aligned with a given detector element corresponds with the peak of the spectrometer transmission spectrum transmitted to that detector element by the focusing optical element.
4. An infrared spectrometer assembly as recited in clause 1, wherein the transmission spectrum of the LVF for a given detector element has a bandpass width ranging from one percent to four percent of the wavelength at the peak of the spectrometer transmission spectrum corresponding to that detector element.
5. An infrared spectrometer assembly as recited in clause 1, wherein the LVF is a transmission filter with a spatially-varying transmission spectrum.
6. An infrared spectrometer assembly as recited in clause 1, wherein the LVF is a bandpass filter whose linear dispersion is matched to the linear dispersion of the diffractive optical element coupled with the focusing optical element.
7. An infrared spectrometer assembly as recited in clause 1, wherein the LVF is long-wave infrared (LWIR) 8 to 12 micron transmission filter.
8. An infrared spectrometer assembly as recited in clause 1, wherein the entrance slit, the collimating optical element, the diffractive optical element, and the focusing optical element are free of cryogenic cooling.
9. An infrared spectrometer assembly as recited in clause 1, wherein the detector array and the LVF are cryogenically cooled.
10. A method of filtering a baseline signal emitted from spectrometer components in an infrared spectrometer assembly:
   transmitting radiation into a spectrometer;
   passing the radiation through a linear variable filter (LVF) to filter the baseline signal being emitted from spectrometer components; and
   receiving the radiation in a detector array.
11. A method as recited in clause 10, further comprising tuning the spectrometer to a desired wavelength.
12. A method as recited in clause 11, wherein passing the radiation through the LVF includes passing a bandwidth ranging from ±0.5% to ±2% of the desired wavelength.
13. A method as recited in clause 10, wherein an entrance slit, a collimating optical element, a diffractive optical element, and a focusing optical element of the spectrometer are at ambient temperature.
14. A method as recited in clause 10, further comprising cryogenically cooling the LVF and the detector array.
15. A method as recited in clause 10, further comprising aligning the LVF with the detector array such that the peak of the transmission spectrum of the section of the LVF aligned with a given detector element corresponds with the peak of the spectrometer transmission spectrum transmitted to that detector element by the spectrometer.

## Claims

1. An infrared spectrometer assembly (100; 200) comprising:
an entrance slit (101; 201);
a collimating optical element (102; 202) aligned with the entrance slit;
a diffractive optical element (104; 204) optically coupled to the collimating optical element;
a focusing optical element (103; 203) optically coupled to the diffractive optical element;
a detector array (106; 206) optically coupled to the focusing optical element; and
a linear variable filter, LVF, (108; 208) optically coupled between the focusing optical element and the detector array.

2. An infrared spectrometer assembly as recited in claim 1, wherein the collimating optical element (202) and the focusing optical element (203) are on a single mirror (205).

3. An infrared spectrometer assembly as recited in claims 1 or 2, wherein the LVF is aligned with the detector array such that the peak of the transmission spectrum of the section of the LVF aligned with a given detector element corresponds with the peak of the spectrometer transmission spectrum transmitted to that detector element by the focusing optical element.

4. An infrared spectrometer assembly as recited in any of claims 1, 2 or 3, wherein the transmission spectrum of the LVF for a given detector element has a bandpass width ranging from one percent to four percent of the wavelength at the peak of the spectrometer transmission spectrum corresponding to that detector element.

5. An infrared spectrometer assembly as recited in any preceding claim, wherein the LVF is a transmission filter with a spatially-varying transmission spectrum.

6. An infrared spectrometer assembly as recited in any preceding claim, wherein the LVF is a bandpass filter whose linear dispersion is matched to the linear dispersion of the diffractive optical element coupled with the focusing optical element.

7. An infrared spectrometer assembly as recited in any preceding claim, wherein the LVF is long-wave infrared (LWIR) 8 to 12 micron transmission filter.

8. An infrared spectrometer assembly as recited in any preceding claim, wherein the entrance slit, the collimating optical element, the diffractive optical element, and the focusing optical element are free of cryogenic cooling.

9. An infrared spectrometer assembly as recited in any preceding claim, wherein the detector array and the LVF are cryogenically cooled.

10. A method (300) of filtering a baseline signal emitted from spectrometer components in an infrared spectrometer assembly (100; 200), comprising:
transmitting (304) radiation into a spectrometer;
passing (306) the radiation through a linear variable filter, LVF, (108; 208) to filter the baseline signal being emitted from spectrometer components; and
receiving (308) the radiation in a detector array (106; 206).

11. A method as recited in claim 10, further comprising tuning the spectrometer to a desired wavelength.

12. A method as recited in claims 10 or 11, wherein passing the radiation through the LVF includes passing a bandwidth ranging from ±0.5% to ±2% of the desired wavelength.

13. A method as recited in any of claims 10, 11 or 12 wherein an entrance slit (101; 201), a collimating optical element (102; 202), a diffractive optical element (104; 204), and a focusing optical element (103; 203) of the spectrometer are at ambient temperature.

14. A method as recited in any of claims 10 to 13, further comprising cryogenically cooling the LVF and the detector array.

15. A method as recited in any of claims 10 to14, further comprising aligning (302) the LVF with the detector array such that the peak of the transmission spectrum of the section of the LVF aligned with a given detector element corresponds with the peak of the spectrometer transmission spectrum transmitted to that detector element by the spectrometer.
